(19) Europäisches Patentamt
European Patent Office
Office européen des brevets

(11) Veröffentlichungsnummer: **0 332 997 A2**

# (12) EUROPÄISCHE PATENTANMELDUNG

(21) Anmeldenummer: **89103979.4**

(22) Anmeldetag: **07.03.89**

(51) Int. Cl.⁴: **C08G 75/02**

(30) Priorität: **17.03.88 DE 3808915**

(43) Veröffentlichungstag der Anmeldung: **20.09.89 Patentblatt 89/38**

(84) Benannte Vertragsstaaten: **BE DE FR GB IT**

(71) Anmelder: **BAYER AG**
**D-5090 Leverkusen 1 Bayerwerk(DE)**

(72) Erfinder: **Köhler, Burkhard, Dr.**
**Virneburgstrasse 9**
**D-4150 Krefeld 11(DE)**
Erfinder: **Meyer, Rolf-Volker, Dr.**
**Buchheimer Strasse 23**
**D-4150 Krefeld(DE)**
Erfinder: **Dorf, Ernst-Ulrich, Dr.**
**Bodelschwinghstrasse 16**
**D-4150 Krefeld 1(DE)**
Erfinder: **Reinking, Klaus, Dr.**
**Robert-Stolz-Strasse 16B**
**D-5632 Wermelskirchen 1(DE)**

## (54) Benzoxazol- oder Oxazolingruppenhaltige Polyarylsulfide.

(57) Die Erfindung betrifft neue Copolyarylensulfide, vorzugsweise Copolyphenylensulfide aus Dihalogenaromaten und Benzoxazol- oder Oxazolingruppen-haltigen Comonomeren.

EP 0 332 997 A2

## Benzoxazol- oder Oxazolingruppen-haltige Polyarylsulfide

Die Erfindung betrifft neue Copolyarylensulfide, vorzugsweise Copolyphenylensulfide aus Dihalogenaromaten und Benzoxazol-oder Oxazolingruppen-haltigen Comonomeren.

Polyarylensulfide werden als inerte, hochtemperaturbeständige Thermoplaste, die zudem einen hohen Füllgrad mit Glasfasern und/oder anderen Mineralien erlauben, zunehmend für die Elektroindustrie interessant.

Der Einsatz dieser Polymeren, insbesondere des Polyparaphenylensulfids (PPS), nimmt besonders in Bereichen, die bislang Duromeren vorbehalten waren, wegen der einfacheren Verarbeitung zu. Hierzu zählen beispielsweise Bauteilen wie Transistoren, Kondensatoren, Mikrochips usw.

Mikrochips bestehen im wesentlichen aus dem eigentlichen Chip, der die gesamte integrierte Schaltung trägt sowie der Peripherie, die dazu dient, die elektronischen Signale heran- und wieder abzuführen. Die elektrisch leitende Verbindung kann durch haarfeine Bonddrähtchen hergestellt werden, die nach der Montage des Chips auf der Unterlage aufgebracht werden. Dieses komplizierte und hochempfindliche Teil gilt es, sicher und vollständig einzubetten.

Dieser Anforderung genügen vorzugsweise nur leichtfließende PPS-Typen, die sich jedoch nur unter Schwierigkeiten elektrolyfrei herstellen lassen.

Ein für die Chipumhüllung geeignetes Polyarylensulfid, vorzugsweise PPS, sollte während des Spritzgusses nicht die Bonddrähtchen verwehen und nahezu elektrolytfrei sein.

Es wurde nun gefunden, daß ein aus Dihalogenbenzol, bevorzugt p-Dichlorbenzol, und di- oder trihalogenierten 2-Aryl-benzoxazolen oder 2-Aryloxazolinen hergestelltes Copolyarylensulfid, vorzugsweise Copolyphenylensulfid die oben genannten Voraussetzungen erfüllt.

Gegenstand der Erfindung sind daher Copolyarylensulfide hergestellt aus 0,1 - 30 Mol %, bevorzugt 2 - 10 Mol-% Monomeren der Formeln (I) und/oder (II), bevorzugt aus Monomeren der Formel (I)

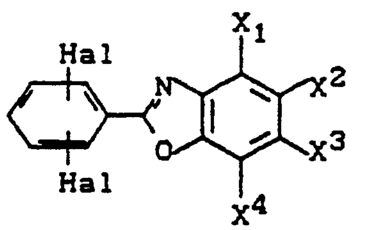

(I)

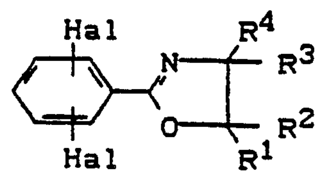

(II)

und 70 - 99,9 Mol-%, bevorzugt 90 - 98 Mol-%, aus Monomeren der Formel (III)

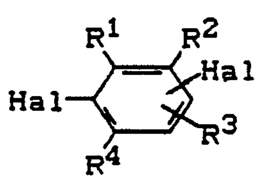

(III),

in welchen

$X^1$, $X^2$, $X^3$ und $X^4$ unabhängig voneinander Wasserstoff (H), $C_1$-$C_{22}$-Alkyl, $C_6$-$C_{14}$-Aryl, Halogen wie Chlor, Brom, bevorzugt Methyl, Phenyl oder Chlor bedeuten, zwei orthoständige Reste Glieder eines 5-7 Kohlenstoffatome zählenden Rings sein können und

$R^1$, $R^2$, $R^3$ und $R^4$ unabhängig voneinander Wasserstoff (H) $C_1$-$C_{22}$-Alkyl, $C_6$-$C_{14}$-Aryl-, bevorzugt Methyl und Phenyl sind und

Hal für para und/oder metaständiges Chlor und Brom, vorzugsweise Chlor steht.

Ein weiterer Gegenstand der Erfindung ist ein Verfahren zur Herstellung von Polyarylensulfiden, dadurch gekennzeichnet, daß

a) 70 bis 99,9 Mol-%, vorzugsweise 2 bis 10 Mol-% Dihalogenaromaten der Formel (III)

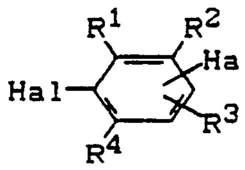

(III),

in welcher die Reste

$R^1$, $R^2$, $R^3$, $R^4$ und Hal die oben angegebene Bedeutung haben und

b) 0,1 bis 30 Mol-%, bevorzugt 2 bis 10 Mol-%, bezogen auf die Dihalogenaromaten der Formel III mit Comonomeren der Formeln (I) und/oder (II)

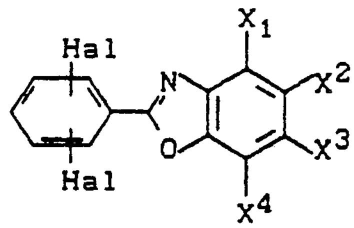

(I)

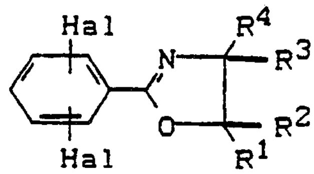

(II)

in welchen die Reste

$X^1$, $X^2$, $X^3$, $X^4$, $R^1$, $R^2$, $R^3$, $R^4$ und Hal die oben angegebene Bedeutung haben,

c) Alkalisulfide, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von Sulfiden zu Halogenaromaten im Bereich von 0,85:1 bis 1,15:1, liegt in

d) einem organischen Lösungsmittel, gegebenenfalls unter Mitverwendung von Katalysatoren und/oder Cosolventien, wobei das molare Verhältnis von Alkalisulfiden c) zu dem organischen Lösungsmittel d) im Bereich von 1:2 bis 1:15 liegt, umgesetzt werden und die Umsetzung bei einer Temperatur von 150 bis 300 °C durchgeführt wird.

Die Comonomeren der Formel (I) und/oder (II) können dabei statistisch oder in Blöcken in die Hauptkette des Copolyarylensulfids eingebaut sein.

Beispiele für Comonomeren der Formel (I) sind 2-(2,5-Dichlorphenyl)-benzoxazol, 2-(2,4-Dichlorphenyl)-benzoxazol, 6-Chlor-2-(2,5-dichlorphenyl)-benzoxazol, 6-Chlor-2-(2,4-dichlorphenyl)-benzoxazol usw.

Beispiel für Comonomeren der Formel (II) sind 2-(2,5-Dichlorphenyl)-oxazolin, 2-(2,4-Dichlorphenyl)-oxazolin, 2-(2,4-Dichlorphenyl)-5-methyl-oxazolin usw.

Beispiele für Dihalogenaromaten der Formel III sind p-Dichlorbenzol, m-Dichlorbenzol, p-Dibrombenzol, 1,3-Dichlorbenzol, 1,3-Dibrombenzol usw.

Die erfindungsgemäßen Copolyarylensulfide sind durch Umsetzung der Monomeren der Formel (I) und/oder (II) sowie (III) und einem Schwefelspender und einer anorganischen Base in einen dipolar-aprotischen Solvens herstellbar.

Als anorganische Base und Schwefelspender können in bekannter Weise bevorzugt Alkalimetallsulfide (z.B. $K_2S$, $Na_2S$), besonders bevorzugt Natriumsulfid, eingesetzt werden. Als dipolar-aprotische Solventien werden z.B. N-Alkyl-Lactame, bevorzugt N-Methyllactame, besonders bevorzugt N-Methyl-caprolactam usw., eingesetzt.

Die Comonomeren der Formel (I) und/oder (II) werden zu 0,1 - 30 Mol-%, bevorzugt zu 2 - 10 Mol-%, die Comonomeren der Formel (III) zu 70 - 99,9, bevorzugt zu 90 -98 Mol-%, eingesetzt.

Vom Schwefelspender, bevorzugt vom Alkalisulfid werden 1 bis 2, bevorzugt 1 bis 1,1 Equivalente eingesetzt, das Volumenverhältnis Lösungsmittel/Feststoff beträgt 1:1 bis 10:1.

Alkalisulfide werden in üblichen Mengen und in üblicher Weise eingesetzt, z.B. sind Lithium-, Natrium, Kalium-und Rubidiumsulfid geeignet, vorzugsweise Natrium- und Kaliumsulfid. Es können Alkalisulfide eingesetzt werden, die aus Hydrogensulfiden mit Alkalihydroxiden wie LiOH, NaOH und KOH hergestellt

werden. In jedem Fall können Mischungen sowohl der Sulfide als auch der Hydroxide eingesetzt werden.

Die Umsetzung kann in Gegenwart von Katalysatoren wie ε-Caprolactam, Aminosäuren oder Alkaliacetaten, -chloriden, -fluoriden (z.B. NaCl, NaOAc, KF) und -aryl- bzw. -alkylsulfonaten durchgeführt werden.

Die Reaktionstemperatur beträgt 150 - 300 °C. Die Reaktion kann bei Drücken von 1 bis 20 bar durchgeführt werden.

Die Alkalisufide können in wasserfreier Form oder als Hydrate eingesetzt werden. Die Entwässerung kann in einem oder mehreren Schritten, bevorzugt durch azeotropes Abdestillieren des Wassers, mit den Monomeren der Formel (III) als Schlepper, erfolgen. Zur Regenerierung der Alkalisulfide werden gegebenenfalls Alkalihydroxide eingesetzt.

Das Zusammengeben der Reaktanden kann in beliebiger Form erfolgen. Die Dihalogenaromaten und die Comonomren der Formeln (I) und/oder (II) können zusammen oder getrennt, kontinuierlich, in Portionen oder direkt auf einmal zu dem Alkalisulfid, dem Lösungsmittel oder einem Teil davon gegeben werden.

Es können auch das Alkalisulfid zusammen mit Lösungsmittel oder einem Teil davon zu Verbindungen der Formeln (I) und/oder (II) und den Dihalogenaromaten gegeben werden. Es können auch alle Reaktanden direkt zusammengegeben werden. Andere Kombinationen des Zusammengehens der Reaktanden sind ebenfalls möglich.

Die Dosierzeit der Reaktionspartner dauert 0 bis 10 h, die Nachkondensationszeit 3 bis 24 h, bevorzugt 6 bis 14 h.

Die Aufarbeitung des Reaktionsgemisches und die Isolierung der Polyarylensulfide kann in bekannter, mannigfaltiger Weise erfolgen, z.B. indem das Reaktionsgemisch in Isopropanol gefällt wird und das ausgefallene Polyarylensulfid nach Ansäuern elektrolytfrei gewaschen wird. Als Waschflüssigkeit kann Wasser, ein Alkohol oder Keton eingesetzt werden.

Die erfindungsgemäßen Polyarylensulfide zeichnen sich durch eine niedrige Kristallisationsgeschwindigkeit bei fast unverändert hohem Kristallitschmelzpunkt aus.

Durch Erwärmen auf Temperaturen oberhalb des Kristallitschmelzpunktes kann die Schmelzviskosität der erfindungsgemäßen Copolyarylensulfide erhöht werden.

Die thermisch nicht nachbehandelten, erfindungsgemäßen Copolyarylensulfide eignen sich vorzugsweise zur Umhüllung von Mikrochips und anderen elektronischen Bauteilen.

Die thermisch nachbehandelten, erfindungsgemäßen Copolyarylsulfide höherer Schmelzviskosität eignen sich vorzugsweise zur Herstellung von Formkörpern durch Spritzguß, von Folien, Fasern und Halbzeugen.

Beispiele

2-Aryl-benzoxazole sind z.B. aus Robert C. Elderfield Heterocyclich Compounds, John Wiley & Sons, London 1957 bekannt.

Herstellung von 2-(2,5-Dichlorphenyl)benzoxazol

Man mischt 255 g (2,342 mol) 2-Aminophenol, 93,7 g (2,342 mol) NaOH und 320 ml Wasser und gibt unter Eiskühlung 490,7 g (2,432 mol) 2,5-Dichlorbenzoylchlorid so zu, daß die Temperatur nicht über 10 °C ansteigt. Dabei fällt 2-(2,5-Dichlorbenzoylamino)-phenol an. Man läßt auf Raumtemperatur kommen, rührt 30 Min. und saugt das 2,5-Dichlor-2′-hydroxy-benzanilid, das als Zwischenprodukt entsteht, ab und trocknet es im Vakuumtrockenschrank bei 80 °C und 20 Torr. Das Amid wird anschließend 6h auf 200 °C erhitzt, wobei das entstehende Reaktionswasser abdestilliert. Nach Destillation des Rückstandes erhält man 504,77 g (81,5 %) 2-(2,5-Dichlorphenyl)benzoxazol vom Siedepunkt 179 °C/3 hPa und vom Schmelzpunkt 90 °C.

Herstellung von 6-Chlor-2-(2,5-Dichlorphenyl)-benzoxazol

Man verfährt wie in Beispiel 1 beschrieben. Statt 255 g 2-Aminophenol werden 335,7 g 2-Amino-4-chlorphenol eingesetzt. Als Zwischenprodukt wird 2,5,5′-Trichlor-2′- hydroxy-benzanilid isoliert. Man erhält nach Destillation 502,3 g (71,7 %) 6-Chlor-2-(2,5-Dichlorphenyl)benzoxazol vom Siedepunkt 243 °C/1,7 hPa und vom Schmelzpunkt 132 °C.

Die Elementaranalysen (C, H, N) der Substanzen aus Beispiel 1-2 stimmen mit den berechneten Werten innerhalb einer Fehlergrenze von 0,3 % überein.

Vergleichsbeispiel

Man legt 608,24 g (4,16 Mol) p-Dichlorbenzol und 2,5 l N-Methylcaprolactam in einem 5 l-Stahlkessel vor, erhitzt auf 215 °C und tropft ein Gemisch aus 1149,3 g (8,94 Mol) Natriumsulfidtrihydrat, 325 g Wasser, 4 g (0,1 Mol) Natriumhydroxid und 141,1 g (1,24 Mol) ε-Caprolactam so zu, daß die Sumpftemperatur bei 215 °C bleibt. Dabei destilliert das zugesetzte Wasser und das Hydratwasser ab. Während der Natriumsulfidzugabe wird 608,24 g (4,16 Mol) p-Dichlorbenzol zugetropft. Die Zugabedauer 4 h. Anschließend wird noch 9 h auf 240 °C erhitzt und der Inhalt des 4 l-Kessels in 40 l Isopropanol abgelassen. Nach Ansäuern auf pH 1 filtriert man das ausgefallene Polymer ab und wäscht mit destilliertem Wasser elktrolytfrei.

Als charakteristische physikalische Eigenschaften wurden die Schmelztemperatur $T_m$, die Rekristallisationstemperatur bei Wiederabkühlen $T_k$ und die Schmelzenthalpie $H_k$ durch DSC-Messungen bestimmt.

Beispiel 1

Man verfährt analog dem Vergleichsbeispiel. Es werden 567 g (3,86 Mol) p-Dichlorbenzol vorgelegt. 15 min nach der Natriumsulfidzugabe werden 79,2 g (0,3 Mol) 2-(2,5-Dichlorphenyl)benzoxazol zugegeben.

| | $T_k$ (°C) | $H_k$ (J/g) | $T_m$ (°C) |
|---|---|---|---|
| Vergleichsbeispiel | 235 | 52 | 278 |
| Beispiel 1 | 186 | 44 | 276 |

Beispiel 2

Das Polyarylensulfid aus Beispiel 1 wird 16 min auf 306 °C erhitzt. Die kontinuierliche Zunahme der Schmelzviskosität (bei 48,7 $s^{-1}$) zeigt folgende Tabelle:

| | | | | | | | | |
|---|---|---|---|---|---|---|---|---|
| Zeit (min) | 2 | 4 | 6 | 8 | 10 | 12 | 14 | 16 |
| ηmelt (Pas) | 5 | 6 | 10 | 13 | 17 | 21 | 33 | 54 |

Beispiel 3

Man verfährt analog dem Vergleichsbeispiel. Es werden 567 g (3,86 Mol) p-dichlorbenzol vorgelegt. 15 min nach der Natriumsulfidzugabe werden 89,55 g (0,3 Mol) 6-Chlor-2-(2,5-dichlorphenyl)-benzoxazol zugegeben.

| | $T_k$ (°C) | $H_k$ (J/g) | $T_m$ (°C) |
|---|---|---|---|
| Vergleichsbeispiel | 235 | 52 | 278 |
| Beispiel 3 | 191 | 30 | 270 |

Beispiel 4

Das Copolyarylensulfid aus Beispiel 3 wird 16 min auf 306 °C erhitzt. Die kontinuierliche Zunahme der Schmelzviskosität (bei 48,7 $s^{-1}$) zeigt folgende Tabelle:

| Zeit (min) | 2 | 4 | 6 | 8 | 10 | 12 | 14 | 16 |
|---|---|---|---|---|---|---|---|---|
| $\eta$melt (Pas) | 6 | 8 | 13 | 18 | 23 | 29 | 33 | 40 |

Beispiel 5

Man verfährt analog dem Vergleichsbeispiel. Es werden 567 g (3,86 Mol) p-Dichlorbenzol vorgelegt. 15 min nach der Natriumsulfidzugabe werden 79,2 g (0,3 Mol) 2-(2,4-Dichlorphenyl)-benzoxazol zugegeben.

| | $T_k$ (°C) | $H_k$ (J/g) | $T_m$ (°C) |
|---|---|---|---|
| Vergleichsbeispiel | 235 | 52 | 278 |
| Beispiel 5 | 176 | 45 | 267 |

| | $T_k$ (°C) | $H_k$ (J/g) | $T_m$ (°C) |
|---|---|---|---|
| Vergleichsbeispiel | 235 | 52 | 278 |
| Beispiel 6 | 179 | 39 | 269 |

**Ansprüche**

1. Copolyarylensulfide hergestellt aus 0,1 - 30 Mol %, bevorzugt 2 - 10 Mol-% Monomeren der Formeln (I) und/oder (II), bevorzugt aus Monomeren der Formel (I),

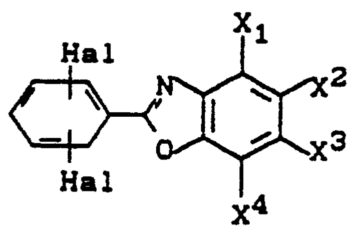

(I)

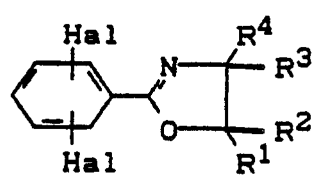

(II)

und 70 - 99,9 Mol-%, bevorzugt 90 - 98 Mol-%, aus Monomeren der Formel (III)

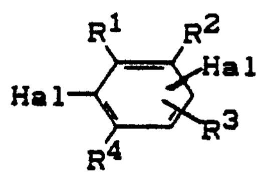

(III),

in welchen
$X^1$, $X^2$, $X^3$ und $X^4$ unabhängig voneinander Wasserstoff (H), $C_1$-$C_{22}$-Alkyl, $C_6$-$C_{14}$-Aryl, Halogen wie Chlor, Brom bevorzugt Methyl, Phenyl oder Chlor bedeuten, zwei ortho-ständige Reste Glieder eines 5-7 Kohlenstoffatome zählenden Rings sein können und
$R^1$, $R^2$, $R^3$ und $R^4$ unabhängig voneinander Wasserstoff (H) $C_1$-$C_{22}$-Alkyl-$C_6$-$C_{14}$-Aryl-, bevorzugt Methyl und Phenyl ist und

Hal für para und/oder metaständiges Halogen wie Chlor und Brom, vorzugsweise Chlor steht.

2. Verfahren zur Herstellung von Copolyarylensulfiden des Anspruchs 1, dadurch gekennzeichnet, daß

a) 70 bis 99,9 Mol-%, vorzugsweise 2 bis 10 Mol-% Dihalogenaromaten der Formel (III)

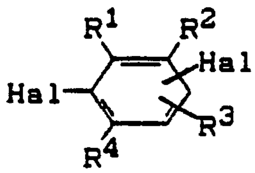

(III),

in welcher die Reste

$R^1$, $R^2$, $R^4$ und Hal die in Anspruch 1 angegebene Bedeutung haben

und

b) 0,1 bis 30 Mol-%, bevorzugt 2 bis 10 Mol-%, bezogen auf die Dihalogenaromaten der Formel III von Comonomeren der Formeln (I) und/oder (II)

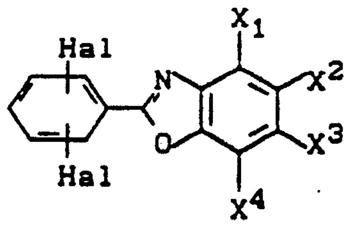

(I)

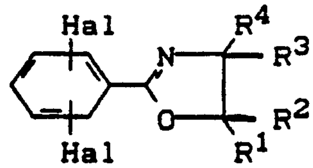

(II)

in welchen die Reste

$X^1$, $X^2$, $X^3$, $X^4$, $R^1$, $R^2$, $R^4$ und Hal die in Anspruch 1 angegebene Bedeutung haben,

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von Sulfiden zu Halogenaromaten im Bereich von 0,85:1 bis 1,15:1, liegt in

d) einem organischen Lösungsmittel, gegebenenfalls unter Mitverwendung von Katalysatoren und/oder Cosolventien, wobei das molare Verhältnis von Alkalisulfiden c) zu dem organischen Lösungsmittel d) im Bereich von 1:2 bis 1:15 liegt, umgesetzt werden und die Umsetzung bei einer Temperatur von 150 bis 300 °C durchgeführt wird.

3. Verwendung von Copolyarylensulfiden nach Anspruch 1 bei der Herstellung von geformten Körpern.